# EUROPEAN PATENT SPECIFICATION

(11) **EP 0 764 514 B1**
(45) Date of publication and mention of the grant of the patent: **20.02.2002**
(21) Application number: 96114723.8
(22) Date of filing: 13.09.1996
(51) Int. Cl.: B29C 49/00, C08L 23/14, C08F 210/06

(54) **Stretch blow-molding process for the preparation of polypropylene containers**
Blasformverfahren zur Herstellung von Polypropylen Behältern
Procédé de fabrication de containers de polypropylène etirée par soufflage

(30) Priority: 15.09.1995 IT MI951931
(43) Date of publication of application: 26.03.1997
(73) Proprietor: BASELL NORTH AMERICA INC., New Castle County Delaware (US)
(72) Inventor: Lesca, Carlo, 20126 Milan (IT); Medri, Alessandro, 44100 Ferrara (IT); Pelliconi, Anteo, 45030 Occhiobello, Rovigo (IT)
(74) Representative: Zumstein, Fritz, Dr.

(56) References cited:
- EP-A- 0 151 741
- EP-A- 0 417 319
- GB-A- 2 139 551
- JP-A- 56 133 138

## Description

The present invention concerns a stretch blow-molding process for the preparation of polypropylene containers, particularly bottles.

Stretch blow-molding processes, both mono- and bi-stage, are commonly used in the art for the production of containers made of thermoplastic materials, particularly polyethylene terephthalate (PET). In fact PET proves to be particularly adequate to be used for the above mentioned processes because it allows one to operate in a wide temperature range (window of processability), and to obtain molded products having excellent mechanical properties and high transparency.

However, due to its high cost there is a strong need to substitute PET with alternative thermoplastic materials. In particular, the crystalline propylene copolymers containing minor quantities of α-olefin comonomers (such as ethylene or 1-butene, for example) are known to have excellent mechanical properties, high transparency, and to be less expensive than PET.

EP-A-0151741 describes a stretch blow-moulding process of propylene-ethylene copolymers having MFR value of at least 4 and containing 1 to 6% by weight of ethylene. Stretching is caused by a combination of blowing and mechanical orientation. No consideration is made on the crystallinity and xylene insolubility of the copolymers. Similar is the approach in EP-A-417319 which describes a stretch blow moulding process of a composition containing a propylene-α-olefin copolymer and up to 10% by weight of a particular component such as the homopolymer of 3-methyl-1-butene.

On the other hand, the properties of said propylene copolymers are strongly influenced by the content of the crystalline polymer fraction, which is insoluble in xylene at 25°C, and by the dimensions and distribution of the crystals of said fraction in the total polymer mass. Consequently, the physical-mechanical properties of the products obtained by melt-processing the crystalline copolymers of propylene depend greatly on the thermal history determined by the type of process and the specific conditions under which the latter is carried out. In the case of stretch blow-molding processes, operating for example with crystalline propylene copolymers containing from 1 to 3% by weight of ethylene, the processability window during the blowing stage of the preforms is about +/- 2° C in terms of the temperature of said preforms, which are obtained by injecting the molten polymer in the appropriate molds. Variations greater than +/- 2°C during the above mentioned blowing stage cause a deterioration of the physical-mechanical properties as well as of the homogeneity of the thickness of the finished product.

This problem becomes particularly critical in the case of bi-stage processes, where the preforms, obtained by injecting the polymer in the appropriate molds, are subjected to discontinuous blowing and stretching, and therefore require a heating and thermal conditioning stage (at 130°C for example), starting from ambient temperature (re-heat stretch blow-molding).

Applicants have now devised a process of stretch blow-molding for the preparation of polypropylene containers wherein use is made, as the polypropylene material, of a crystalline propylene copolymer containing from 6 to 10% by weight, of one or more C₄-C₈ α-olefins as defined in claim 1.

In particular, the process of the present invention comprises subjecting to blowing a preform made of or comprising the above said crystalline propylene copolymer.

Generally the said preform is obtained, as previously said, by injecting the molten polymer in the appropriate molds.

The crystalline propylene copolymer containing from 6 to 10% by weight of one or more C₄-C₈ α-olefins can be used in the pure state or in admixture with other olefin polymers, such as propylene homopolymers or crystalline copolymers of propylene, containing from 1 to 3% by weight of ethylene. The amount of the said additional olefin polymers, when present, is preferably from 10% to 40% by weight, more preferably from 10 to 30% by weight, with respect to the total weight of the polypropylene material

In the case of a bi-stage process the Melt Flow Rate of the above mentioned crystalline propylene copolymer, measured according to ASTM D 1238 condition L (M.F.R.L), preferably ranges from 6 to 20, more preferably from 8 to 12 g/10 min.

In the case of a mono-stage process, where the preform is extracted from the mold, immediately subjected to thermal conditioning, and blown without going through a stage of cooling to ambient temperature, the Melt Flow Rate L of the crystalline propylene copolymer can be even lower, preferably higher than or equal to 1 g/10 min.

The use of the above mentioned crystalline propylene copolymer, which constitutes the essential feature of the process of the present invention, allows one to obtain finished products, in particular bottles and flacons, having excellent physical-mechanical properties, operating with a processability window of about +/- 4°C during the blowing stage.

For example, should one want to carry out the blowing at 130°C, a fluctuation in temperature in the preform of about 4°C around said value (i.e., from 126 to 134°C) can be tolerated, since said fluctuations basically do not compromise the physical-mechanical properties and the homogeneity of the thickness in the finished product.

Indicatively the blowing temperature is from 125 to 135°C.

The crystalline propylene copolymer used in the process of the present invention has a melting point ranging from 135 to 156°C, and a crystallization point ranging from 105 to 120°C, both measured by DSC (Differential Scanning Calorimetry) with a temperature variation of 20°C per minute.

Moreover, the content-of fraction insoluble in xylene at 25°C is higher than or equal to 93% by weight, preferably higher than or equal to 95% by weight.

Specific examples of C₄-C₈ α-olefins contained in the above mentioned crystalline propylene copolymer are: 1-butene, 1-pentene, 1-hexene, 4-methyl-1-pentene, 1-octene.

The propylene/1-butene copolymers are preferred.

In order to obtain better transparency values (Haze) it is also advisable to add a nucleating agent to the polypropylene material in quantities ranging from 0.05 to 0.3% by weight.

Examples of nucleating agents are dibenzylidene sorbitol (DBS), methyldibenzylidene sorbitol (MDBS), and dimethyldibenzylidene sorbitol (DMDBS) sold under the Millad 3988 trademark.

The crystalline propylene copolymers used in the process of the present invention are well known as such and belong to the family of the copolymers that can be obtained by way of polymerization processes in the presence of coordination catalysts. Said processes and the copolymers obtained from them are widely described in the art. For example one can use the high yield and highly stereospecific Ziegler-Natta catalysts and the polymerization processes described in European patent n. 45977.

The above mentioned M.F.R.L values can be obtained directly in polymerization by adequately adjusting the molecular weight regulating agent (such as hydrogen, for example), or can be achieved by way of a visbreaking process to which the crystalline propylene copolymers are subjected.

The visbreaking process of the polymer chains is carried out by using the appropriate techniques. One of said techniques is based on the use of peroxides which are added to the copolymer in a quantity that allows one to obtain the desired degree of visbreaking.

The peroxides that are most conveniently employable for the visbreaking process have a decomposition temperature preferably ranging from 150 to 250°C. Examples of said peroxides are the di-tert-butyl peroxide, the dicumyl peroxide, the 2,5-dimethyl-2,5-di(tert-butyl peroxy)hexyne, and the 2,5-dimethyl-2,5-di(tert-butyl peroxy)hexane, which is marketed under the Luperox 101 trade name.

The quantity of peroxide needed for the visbreaking process preferably ranges from 0.05% to 1% by weight of the copolymer.

As previously stated, the process of the present invention allows one to obtain polypropylene containers having high physical-mechanical properties.

For example, by using in a typical two-stage process, a propylene/1-butene copolymer having the following properties:

| | |
|---|---|
| 1-butene content (% weight) | 8 |
| MFRL (g/10 min.) | 10 |
| fraction insoluble in xylene at 25°C (% weight) | 96.5 |
| melting point (°C) | 147 |
| crystallization point (°C) | 113 |
| DMDBS content (% weight) | 0.22 |

and under the following process conditions:

| **PREFORM CHARACTERISTICS** | |
|---|---|
| Weight of preform (g) | 30 |
| Maximum thickness of preform (mm) | 5 |
| Height of preform (mm) | 102 |
| Maximum outside diameter of preform (mm) | 31.5 |
| Minimum inside diameter of preform (mm) | 21.5 |

| **PREFORM MOLDING PARAMETERS** | |
|---|---|
| Polymer melt temperature (°C) | 220 |
| Mold temperature (°C) | 20 |
| Injection time (seconds) | 6 |
| Injection pressure (MPa) | 50 |
| Total cycle time (seconds) | 35 |

| **BOTTLE STRETCH-BLOW PARAMETERS** | |
|---|---|
| Type of heating : | infrared lamps with forced hot air circulation. |
| Heating time (seconds) : | 90-120 |
| Preform temperature °C : | 127+/-4 (measured with infrared television camera) |
| Stretch and Blow cycle time (seconds) : | 4.5 |

one obtains bottles with the following characteristics:

| **BOTTLE GEOMETRIC CHARACTERISTICS** | |
|---|---|
| Bottle weight (g) | 30 |
| Bottle average thickness (mm) | 0.37+/-0.02 |
| Bottle height(mm) | 275 |
| Bottle cross-section | square with rounded corners |
| Diagonal of the bottle | |
| cross-section (mm) | 30 |
| Bottle cross-section side (mm) | 65 |
| Average radial stretch ratio | 2.3 |
| Average axial stretch ratio | 3.2 |
| Overall stretch ratio | 7.3 |

| **BOTTLE MECHANICAL CHARACTERISTICS** | |
|---|---|
| Radial DMTA at 23°C (MPa) | 2320 |
| Top load (N) | 165 |
| Haze (%) | 3.1 |
| Note: Average radial stretch ratio = the ratio between the maximum internal diameter of the bottle and the maximum internal diameter of the preform before blowing; Average axial stretch ratio = the ratio between the length measured in the bottle from the start point of axial stretch up to the internal bottom of the bottle, and the length measured from the corresponding point in the preform and the internal bottom of the preform; Overall stretch ratio = ratio between the above said two ratios; Radial DMTA: measured according to the standard ASTM D 5026; Top load: it is the maximum squeezing force before collapse (buckling) of the walls of the bottle; Haze: measured according to the standard ASTM 1003. | |

## Claims

1. A stretch blow-moulding process for the preparation of polypropylene containers comprising:
i) moulding a polypropylene material into a preform;
ii) stretch blow-moulding said preform into a desired article;
wherein said polypropylene material comprises a crystalline propylene copolymer containing from 6 to 10% by weight of at least one C₄-C₈ α-olefin, said crystalline propylene copolymer has a melting point ranging from 135 to 156°C and a crystallization point ranging from 105 to 120°C and said crystalline propylene copolymer includes a fraction insoluble in xylene at 25°C higher than or equal to 93% by weight.

2. The process of claim 1 wherein the polypropylene material is a propylene/1-butene crystalline copolymer.

3. The process of claim 1 wherein the temperature of said preform during the stretching step is 126 to 134°C.

4. The process of claim 1 wherein said preform is stretched into a desired article without first being permitted to cool to ambient temperature, and said crystalline propylene copolymer has a melt flow rate of at least 1 g/10 minutes, as measured according to ASTM D 1238, condition L.

5. The process of claim 1 wherein said preform is permitted to cool to ambient temperature, and is subsequently heated and thermally conditioned prior to stretching into a desired article, and said crystalline propylene copolymer has a melt flow rate of 8-12 g/10 minutes, as measured according to ASTM D 1238, condition L.

6. The process of claim 1 wherein the polypropylene material further comprises a nucleating agent in quantities ranging from 0.05 to 0.30% by weight.

7. The process of claim 1 wherein bottles and flacons are produced.

## Patentansprüche

1. Streckblasformverfahren zur Herstellung von Polypropylenbehältern, umfassend
i) Formen eines Polypropylenmaterials in einen Vorformling;
ii) Streckblasverformen des Vorformlings in ein gewünschtes Erzeugnis;
worin das Polypropylenmaterial ein kristallines Propylencopolymer, enthaltend 6 bis 10 Gew.% zumindest eines C₄-C₈ α-Olefins, umfaßt, wobei besagtes kristallines Propylencopolymer einen Schmelzpunkt im Bereich von 135 bis 156°C und einen Kristallisationspunkt im Bereich von 105 bis 120°C aufweist, und das kristalline Propylencopolymer eine in Xylol bei 25°C unlösliche Fraktion von mehr als oder gleich 93 Gew.% beinhaltet.

2. Verfahren gemäß Anspruch 1, worin das Polypropylenmaterial ein kristallines Propylen/1-Butencopolymer ist.

3. Verfahren gemäß Anspruch 1, worin die Temperatur des Vorformlings während der Streckstufe 126 bis 134°C beträgt.

4. Verfahren gemäß Anspruch 1, worin der Vorformling in ein gewünschtes Erzeugnis gestreckt wird, ohne zuerst auf Raumtemperatur abkühlen zu können und das kristalline Propylencopolymer eine Schmelzflußrate von zumindest 1g/10 Minuten, gemessen gemäß ASTM D 1238, Bedingung L, besitzt.

5. Verfahren gemäß Anspruch 1, worin der Vorformling auf Raumtemperatur abkühlen kann und anschließend erhitzt und thermisch konditioniert wird, bevor er in ein gewünschtes Erzeugnis gestreckt wird,und das kristalline Propylencopolymer eine Schmelzflußrate von 8 bis 12 g/10 Minuten, gemessen gemäß ASTM D 1238, Bedingung L, besitzt.

6. Verfahren gemäß Anspruch 1, worin das Polypropylenmaterial weiterhin ein Kernbildungsmittel in Mengen im Bereich von 0,05 bis 0,30 Gew.% umfaßt.

7. Verfahren gemäß Anspruch 1, worin Flaschen und Flakone hergestellt werden.

## Revendications

1. Un procédé de soufflage par étirage pour la préparation de récipients en polypropylène comprenant les étapes consistant à :
i) mouler un matériau en polypropylène en une préforme ;
ii) souffler par étirage ladite préforme en un article souhaité ;
dans lequel ledit matériau en polypropylène comprend un copolymère de propylène cristallin contenant entre 6 et 10 % en poids d'au moins une α-oléfine en C₄-C₈, ledit copolymère de propylène cristallin présentant un point de fusion compris entre 135 et 156°C, un point de cristallisation compris entre 105 et 120°C, et ledit copolymère de propylène cristallin comprenant une fraction insoluble dans le xylène à 25°C supérieure ou égale à 93 % en poids.

2. Un procédé selon la revendication 1, dans lequel le matériau en polypropylène est un copolymère cristallin de propylène/1-butène.

3. Un procédé selon la revendication 1, dans lequel la température de ladite préforme lors de l'étape d'étirage est comprise entre 126 et 134°C.

4. Un procédé selon la revendication 1, dans lequel ladite préforme est étirée en un article souhaité sans avoir été auparavant refroidie à température ambiante, et dans lequel ledit copolymère de propylène cristallin présente une vitesse d'écoulement à l'état fondu d'au moins 1 g/10 minutes, telle que mesurée selon la norme ASTDM D 1238, condition L.

5. Un procédé selon la revendication 1, dans lequel ladite préforme peut être refroidie à température ambiante, puis est chauffée et conditionnée de manière thermique avant l'étirage en un article souhaité, et dans lequel ledit copolymère de propylène cristallin présente une vitesse d'écoulement à l'état fondu comprise entre 8 et 12 g/10 minutes, telle que mesurée selon la norme ASTDM D 1238, condition L.

6. Un procédé selon la revendication 1, dans lequel le matériau en polypropylène comprend en outre un agent de nucléation en des quantités comprises entre 0,05 et 0,30 % en poids.

7. Un procédé selon la revendication 1, dans lequel des bouteilles et des flacons sont produits.
